# EUROPEAN PATENT APPLICATION

(11) **EP 2 866 183 A1**
(43) Date of publication of application: **29.04.2015**
(21) Application number: 13806164.3
(22) Date of filing: 21.03.2013
(51) Int. Cl.: G06Q 30/02, H04W 4/02

(54) **TARGETED ADVERTISING SYSTEM AND METHOD USING CUSTOMER INFORMATION AND LOCATION INFORMATION THROUGH POINT REWARD SERVICE**

(30) Priority: 20.06.2012 KR 20120066262
(71) Applicant: Kim, Sang Baek, Seoul 132-792 (KR)
(72) Inventor: KIM, Sang Baek, Seoul 132-792 (KR); LEE, Yong Jin, Seoul 143-824 (KR)
(74) Representative: reuteler & cie SA
(86) International application number: PCT/KR2013/002357
(87) International publication number: WO 2013/191357

(57) **Abstract**

The advertisement system of the present invention includes a customer terminal for registering a customer in a point reward server as a member based on segment information and transmitting location information in real-time, a member store terminal for registering a member store in the point reward server as a member based on a service or a product, and awarding and notifying points to the point reward server so as to be managed, an advertiser terminal for requesting an advertisement on-line, and the point reward server for registering the members, managing the points, receiving the request for the advertisement, placing a target advertisement, sharing an advertisement profit with the member store and the customer at a predetermined ratio.

## Description

### TECHNICAL FIELD

Generally, advertisement is an act of providing information on products and services to consumers and encouraging the customers to buy things they need. However, since the advertisement is targeting random people in the present days, customers contacting with the advertisement are indifferent to the advertisement, and desire of purchase is drastically reduced. Accordingly, the present invention relates to a system and method for accumulating points at a predetermined ratio for member stores configured of merchants, organizations and the like of a community targeting customers using a terminal such as a smart phone or the like which supports a location-based service and customers purchasing products at a member store, providing advantages such as a discount when the customer uses the member store again, allowing target advertisement for providing information necessarily needed to an advertiser and a customer based on location information and customer segment data provided when the customer registers as a member or when the points are accumulated for the customer, and sharing a profit generated through the target advertisement among the customers and the member stores.

### BACKGROUND ART

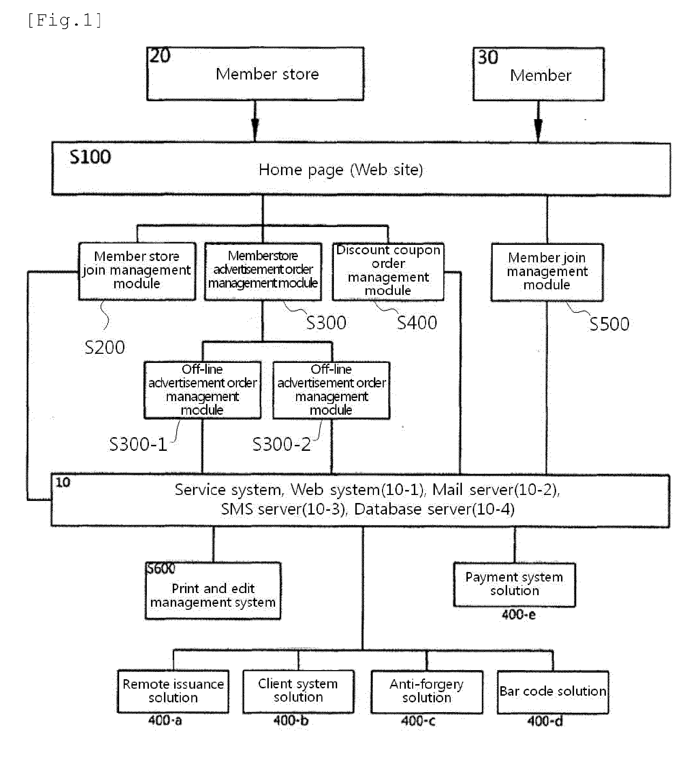

Korean Patent Laid-open Publication No. 10-2005-0004084 (laid-opened on January 12, 2005) discloses a conventional technique related to the present invention. FIG. 1 is a view showing the configuration of an integrated marketing system, which combines conventional Internet-based integrated discount marketing, on-line and off-line advertisements, and management of member stores and members. In the integrated marketing system which combines conventional Internet-based integrated discount marketing, on-line and off-line advertisements, and management of member stores and members as shown FIG. 1, a member store and a member (a consumer) respectively connect to a server through a web site. A member store join management module s200 comprehensively manages personal information data, such as application and withdrawal of a membership by a member store, changes of various kinds of membership information and the like, and information related to a member store, such as a mileage data, details of various advertisement orders of a member store and a result thereof, an image of the advertisement, details of issuance, order and collection of coupons (points) of each member store, a remaining advertisement unit needed for ordering an off-line advertisement, and the like. A member store advertisement order management module s300 is in charge of the process of ordering and changing an on-line or off-line advertisement of a member store and provides data, interfaces and the like required for the process. The member store advertisement order management module s300 is divided into an off-line advertisement order management module s300-1 and an event advertisement order management module s300-2. Here, an off-line advertisement is a flyer or booklet type advertisement manufactured for off-line advertisement of a member store, and an event advertisement is a character message type advertisement for advertising an event of a member store, such as a surprise sale or the like. In addition, a home page s100 functions as a gateway of the entire system access, and provides a space for joining and communication of a member and a member store, provides various on-line advertisements of a member store, provides a space for registering an event of a member store, provides a space for providing various guides such as introduction of a host company, usage of the system and integrated discount coupons, and a method of exchanging points, and provides a tool and space for other requirements. A discount coupon order management module s400 is in charge of ordering and issuing an integrated discount coupon, and a member join management module s500 manages data specialized for each member, such as application and withdrawal of a membership, personal information data and the like. A mail server 10-2 is used to send an e-mail to a member 30 or a member store 20 if needed or provide an SMS advertisement to members 30 who do not have a cellular phone when an event advertisement is provided. An SMS server 10-3 is used when an advertisement using a character service or a process of progressing various requests is notified to a member or a member store, and a print and edit management system s600 is a system for receiving a draft of an advertisement ordered by the off-line advertisement order management module s300-1 and editing/panel printing and storing the draft. In addition, a remote print solution 400-a is a solution used to remotely issue a coupon using a printer in a branch or home of a member, and a client system solution 400-b is a solution for accumulating points and issuing an integrated discount coupon by connecting an on-line member store and a server. An anti-forgery solution 400-c is a solution related to printing a watermark, a watercode or a two-dimensional bar code for preventing forgery of a coupon, and a bar code solution 400-d is an integrated solution related to management of a bar code of a coupon or a membership card, accumulation and deduction of points, and the like. A payment system solution 400-e is used for payment of a membership fee and an advertisement fee of a member 30 and a member store 20, payment of the denomination and a handling fee of an integrated discount coupon, and the like. A server system 10, which is the backbone connected to these modules and systems, is configured by integrating a database server 10-4, a web server 10-1, an SMS server 10-3 and a mail server 10-2. In relation to the integrated discount coupon described above, when off-line member stores are largely divided into a point accumulation type member store which prefers point accumulation and a coupon type member store which prefers discount coupons, the point accumulation type member store among these is referred to as an off-line point accumulation and coupon member store since a discount coupon may also be used at the store, and the other member store is referred to as a coupon only member store. In addition, since the client system solution 400-b connected to the host company is installed in an on-line member store server 80 and a discount coupon can be issued remotely, it is generally referred to as an on-line point accumulation and coupon member store. At this point, a branch or a relay center (hereinafter, referred to as a branch) is installed in each region within the scope of the host company, and a branch terminal 40 and the server 10 are connected to each other through a dedicated network or a virtual private network (VPN) and perform a task needed for managing member stores and customer.

### DISCLOSURE OF INVENTION

### TECHNICAL PROBLEM

There is a problem in that the conventional integrated marketing system as described above cannot provide a target advertisement customized to an advertiser due to the lack of information on the customer location and the demand estimation. In addition, since advertisement profit generated through the advertisement is not shared with a customer confirming the advertisement of the advertiser, the customer does not use the advertisement, and thus the advertisement is ineffective. Therefore, the present invention has been made in view of the above problems, and it is an object of the present invention to enhance the effect of advertisement by rewarding a member store and a customer who purchase a product at a member store or an organization using a portable terminal such as a smart phone with points and performing a target advertisement using segment information, purchase history information and location information of the customer provided when the customer registers as a member. In addition, another object of the present invention is to enhance the effect of advertisement by providing an advertisement of an advertiser to the customer and sharing an advertisement profit generated through the advertisement with the customer confirming the advertisement and a member store managing the customer. A still another object of the present invention is to greatly reduce use of flyers by promoting a target advertisement in a local region, thereby preserving the environment of the earth as a result. In addition, a still another object of the present invention is to reduce the number of point cards unnecessary to the customer by integrating various kinds of points.

### TECHNICAL SOLUTION

To accomplish the above objects, according to one aspect of the present invention, there is provided an advertisement system and method using a smart point reward service. The advertisement system using a smart point reward service includes: a customer terminal 100 for registering a customer in a point reward server 300 as a member based on segment information such as a customer terminal phone number, a sex and an age and transmitting, if needed, location information of the customer terminal to the point reward server in real-time for customers agreed to location tracing; a member store terminal 400 for encouraging customers to register in the point reward server as a member through a method of awarding points or the like for using a service or a product at an organization or a store or contributing to the organization or store, such as a restaurant, a theater, a clothing store, a shoe store, a school, a church or the like, transmitting purchase history information to the point reward server so that the purchase history information may be managed in such a manner that the points are awarded to the customer at a predetermined ratio in proportion to a used amount or a contribution level, and sharing information on the registered members; an advertiser terminal 500 for transmitting an advertisement desired by an advertiser or target advertisement conditions to the point reward server 300 on-line; and the point reward server 300 for receiving the target advertisement conditions of the advertiser, determining a target advertisement object utilizing registration information, purchase history information and location information of the customer and the member store, transmitting a target advertisement through the customer terminal 100, which is the target advertisement object, and sharing an advertisement profit generated from the sales amount paid by the advertiser through the target advertisement with the member store managing the registered members and the customer confirming the advertisement at a predetermined ratio. In addition, the advertisement method using a point reward service includes: a first step of registering, by the member store terminal 400, a member store in the point reward server as a member; a second step of registering, by the customer terminal 100, a customer in the point reward server as a member; a third step of receiving, by the point reward server, purchase history information on the products or services purchased by the customer at each member store, such as product information, member store information, use amount information, point information, customer information, contribution information and the like, from the member store terminal and storing and managing the purchase history information; a fourth step of receiving information on an advertisement requested by the advertiser and target advertisement conditions from the member store terminal and storing and managing the advertisement information and the target advertisement conditions; a fifth step of setting a target advertisement object based on information on the member store used by the customer, the product information, the use amount information, the point information and the customer information; a sixth step of transmitting the selected advertisement of the advertiser to the customer terminal, which is the target advertisement object, and expressing the advertisement; a seventh step of calculating a shared amount according to a contribution level of the customer confirming the advertisement and the member store and a predetermined criterion based on an advertisement profit; and an eighth step of transferring the calculated shared amount to bank accounts of the customer and the member store. In addition, in the step of setting a target advertisement object, the target advertisement object may be set by combining the location information received in real-time from the customer agreed to providing the location information, and a step of filtering reception of pornographic materials may be added before the step of transmitting the advertisement to the customer terminal and expressing the advertisement in the sixth step.

### ADVANTAGEOUS EFFECTS

The advertisement system and method using a smart point reward service according to the present invention configured as described above may enhance the effect of advertisement since a target advertisement is performed based on information on the location, inclination, consumption propensity and the like of a customer. In addition, the present invention is effective in that since the profit generated through the advertisement is shared with a company of the present invention at a predetermined ratio according to a predetermined criterion such as a contribution level of a customer confirming the advertisement and a member store registering the customer as a member, they will actively participate in this service. In addition, another effect of the present invention is that if the target advertisement is revitalized and the profit rate is increased, customers and member stores will be actively registered as a member, and, therefore, the point reward service is more revitalized, and the effect of the target advertisement is increased, and thus an additional effect of activating a survey of public opinion is expected. A still another effect of the present invention is that since point accumulating systems separately operated by each member store can be managed in an integrated manner, the number of possessed point cards can be reduced, and if location-based local advertisement is revitalized, use of the flyers mainly used for the local advertisement is reduced, and thus an effect of preserving the environment of the earth can be expected.

### BRIEF DESCRIPTION OF THE DRAWINGS

FIG. 1 is a view showing the configuration of an integrated marketing system, which combines conventional Internet-based integrated discount marketing, on-line and off-line advertisements, and management of member stores and members.
FIG. 2 is a view showing the entire configuration of an advertisement system using a smart point reward service according to the present invention.
FIG. 3 is a view showing the detailed configuration of a point reward server applied to the present invention.
FIG. 4 is a flowchart illustrating the control flow of an advertisement method using a smart point reward service according to a first embodiment of the present invention.
FIG. 5 is a flowchart illustrating the control flow of an advertisement method using a smart point reward service according to a second embodiment of the present invention.

### BEST MODE FOR CARRYING OUT THE INVENTION

An advertisement system and method using a smart point reward service according to the present invention will be hereafter described in detail with reference to the accompanying drawings.

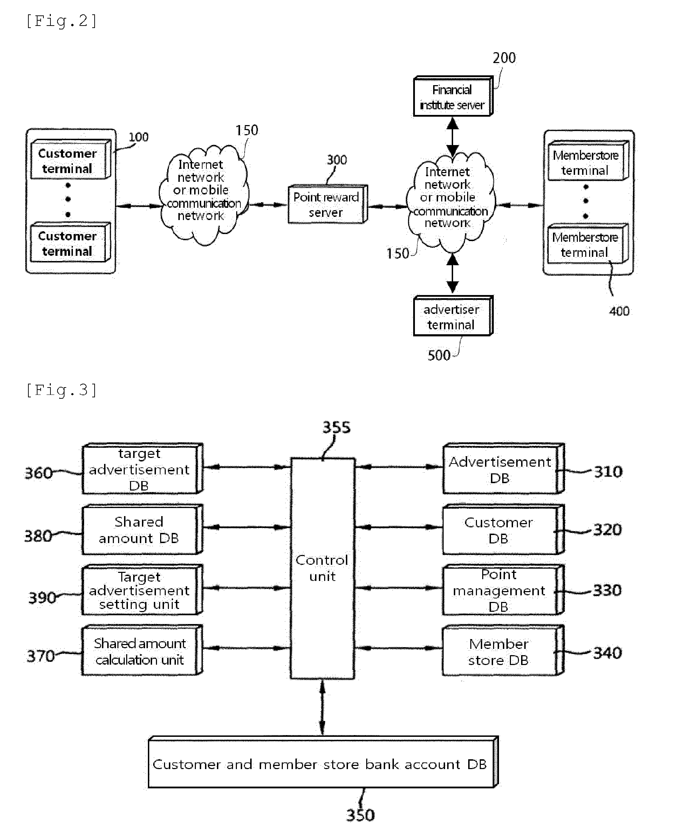

FIG. 2 is a view showing the entire configuration of an advertisement system using a smart point reward service according to the present invention. In FIG. 2, the advertisement system using a smart point reward service according to the present invention includes: a plurality of customer terminals 100 such as a smart phone connected to a point reward server 300 through an Internet network or a mobile communication network 150, registered in the point reward server 300 as a member, and capable of transmitting location information to the point reward server in real-time; a member store terminal 400 connected to the point reward server 300 through the Internet network or the mobile communication network 150 and installed in a restaurant, a clothing store, a theater, various organizations or the like to input purchase history information such as points and to share information on a customer registered as a member of a member store of the point reward server; an advertiser terminal 500 connected to the point reward server 300 through the Internet network or the mobile communication network 150 to transmit an advertisement requested by an advertiser and target advertisement conditions to the point reward server; and the point reward server 300 for controlling the target advertisement system to store and manage a customer registered as a member based on segment information of the customer such as a name, an age, a sex, a terminal phone number and the like received from the customer terminal 100, store and manage a member store registered as a member based on a service type, a product and a location information of the member store received from the member store terminal 400, receive, store and manage purchase history information (a product, a service type, customer information, member store information, a use amount, points and the like) on the products and services purchased by the customer at the member store, transmit point information or the like among the received purchase history information to the customer terminal 100 if needed, receive the advertisement requested by the advertiser through the advertiser terminal 500 or off-line and target advertisement conditions, set, store and manage a target advertisement object, advertise a product by transmitting the target advertisement to the customer terminal, which is the target advertisement object, calculate a profit amount for the sales amount generated through the advertisement, and share the profit by transferring a portion of the profit amount to bank accounts of the customer using the advertisement and the member store managing the customer as a member through a financial institute server 200 according to a predetermined criterion such as a predetermined ratio of profit or a level of contribution. In the above descriptions, when the customer purchases a service or a product on a credit card or in cash or contributes to an organization such as a school, a church or the like through another service, points of the customer is managed by transmitting purchase (use) history information of the customer to the point reward server 300 from the member store terminal 400 and transmitting points or the like of the customer to the customer terminal 100 from the point reward server 300 if needed. In addition, when points are generated for a service or a product purchased or contributed by the customer through the member store terminal 400, the points can be managed by simultaneously transmitting the points to the point reward server 300 and the customer terminal 100. In addition, the point reward server 300 may receive, in real-time, location information of the customer terminal 100 of a customer agreed to providing the location information and provide information on an advertiser in a region close to the position of the customer based on the location information of the customer.

FIG. 3 is a view showing the detailed configuration of a point reward server applied to the present invention. In FIG. 3, the point reward server 300 applied to the present invention includes: a customer DB 320 for storing and managing information on a customer registered as a member based on segment information such as a customer name, a sex, an age, a customer terminal number and the like received from the customer terminal 100 such as a smart phone or the like; a member store DB 340 for storing and managing information on a member store registered as a member based on a service type, a product, location information and the like related to the member store received from the member store terminal; a point management DB 330 for storing and managing information on the points awarded at a predetermined ratio for an amount paid by the customer at the member store and a contribution level, member store information, customer information and use amount information received from the member store terminal 400; an advertisement DB 310 for storing and managing an advertisement requested by an advertiser and advertisement conditions received from the advertiser terminal 500; a target advertisement setting unit 390 for setting a target advertisement object of a target advertisement requested by the advertiser from the advertisement DB 310 based on the point information, the member store information, the customer information and the use amount information, which are purchase history information of the customer stored in the point management DB 330; a target advertisement DB 360 for storing and managing the target advertisement object set by the target advertisement setting unit 390 and an advertising copy; a shared amount determination unit 370 for determining a profit according to a sales amount of the advertisement and determining a sharing ratio according to the contribution level of the customer confirming the advertisement and the member store, after advertising a product by periodically transmitting the target advertisement to the customer terminal 100, which is the target advertisement object; a shared amount DB 380 for storing and managing information on the shared amount determined by the shared amount determination unit 370; and a customer and member store bank account DB 350 for storing and managing bank accounts of the customer and the member store to transfer the shares of the customer and the member store stored in the shared amount DB 380. In addition, the point reward server 300 includes a control unit 355 for controlling the target advertisement system to receive customer information from the customer terminal 100 through an Internet network or a mobile communication network, register a customer as a member and store and manage the customer in the customer DB 320, to receive member store information from the member store terminal 400 through the Internet network or the mobile communication network, register the member store as a member and store and manage the member store in the member store DB 340, to receive an advertisement requested by an advertiser from the advertiser terminal 500 through the Internet network or the mobile communication network and store and manage the advertisement in the advertisement DB 310, to receive bank accounts of the customer and the member store from the customer terminal 100 and the member store terminal 400 through the Internet network or the mobile communication network and store and manage the bank accounts in the customer and member store bank account DB 350, to receive purchase history information (customer information, member store information, a service type, a product, a use amount and points) on the products and services purchased by the customer at the member store or a contribution level from the member store terminal 400 through the Internet network or the mobile communication network and store and manage the purchase history information and the contribution level in the point management DB 310, to set a target advertisement object by the target advertisement setting unit 390 based on the information stored in the point management DB 330 and store the target advertisement object in the target advertisement DB 360, to advertise the product by transmitting an advertising copy to the customer terminal 100, which is the target advertisement object, to calculate a predetermined portion of a profit as a shared amount of the customer and the member store by the shared amount determination unit 370 based on the information on the customer confirming the advertisement, after the target advertisement is placed, and store and manage the shared amount in the shared amount DB 380, and to transfer the portion of the profit to the bank accounts of the customer and the member store stored in the customer and member store bank account DB 350 according to the information on the shared amount of the customer and the member store stored in the shared amount DB 380. The method of setting a target advertisement object performed by the target advertisement setting unit 390 is accomplished based on the information stored in the point management DB. After the shared amount is calculated in the method described above, the shared amount is transferred to the bank accounts of the customer and the member store stored in the customer and member store bank account DB 350 for a predetermined period of time. In addition, when the customer purchases a service or a product at a member store and uses the points stored in the point management DB 330, the point reward server receives information on using the points from the member store terminal 400, deducts the used point from the point information stored in the point management DB 330, and stores and manages the point information by updating the point information.

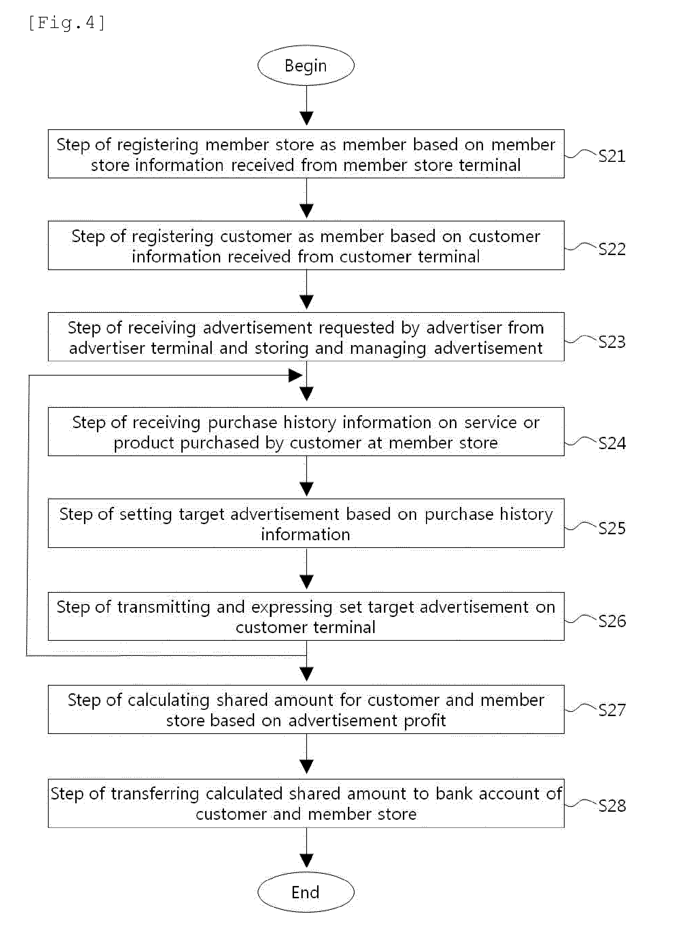

FIG. 4 is a flowchart illustrating the control flow of an advertisement method using a smart point reward service according to a first embodiment of the present invention. In FIG. 4, a first step of the first embodiment of the advertisement method using a smart point reward service of the present invention is a step of registering a member store as a member based on member store information received from the member store terminal S21. The member store information may include information on a service type, a product, a location of the member store and the like. Next, a second step of the first embodiment is a step of registering a customer as a member based on segment information of the customer received from the customer terminal S22. The customer information may include a customer name, a sex, an age, a customer terminal number and the like. Next, a third step is a step of receiving information on an advertisement requested by an advertiser from the advertiser terminal and storing and managing the advertisement information S23. The advertiser creates contents to be advertised and target advertisement conditions such as a sex, an age, a location, preference of purchase, a time zone and the like of an advertisement target and transmits the advertisement contents and conditions to the point reward server so as to be stored and managed in the advertisement DB. Then, a fourth step is a step of receiving, storing and managing purchase history information on the service or product purchased by the customer at the member store S24. The purchase history information may include customer information, member store information, a purchased service type, a product, a use amount, points, a contribution level and the like, and the information can be appropriately combined. Next, a fifth step is a step of setting a target advertisement based on the purchase history information S25. The step of setting a target advertisement is setting a target advertisement object based on the customer information, the member store information, the service type, the product, the use amount, the points, the contribution level and the like based on the service or product purchased by the customer at the member store. In addition, the target advertisement is periodically updated by the changes of the purchase history information on the service or product purchased by the customer at the member store. Next, a sixth step is a step of transmitting the set target advertisement to the customer terminal, which is the target advertisement object, through an Internet network or a mobile communication network and expressing the target advertisement on the customer terminal S26. Next, a seventh step is a step of calculating a shared amount at a predetermined ratio according to the contribution level of the customer confirming the advertisement and the member store managing the member based on the profit of the advertisement S27. Calculation of the shared amount is sharing the profit at a predetermined ratio according to the contribution level of the customer confirming the advertisement and the member store managing the member based on the profit of the advertisement on the basis of a predetermined time period. Next, an eighth step is a step of transferring the calculated shared amount to bank accounts of the customer and the member store S28 and terminating the process.

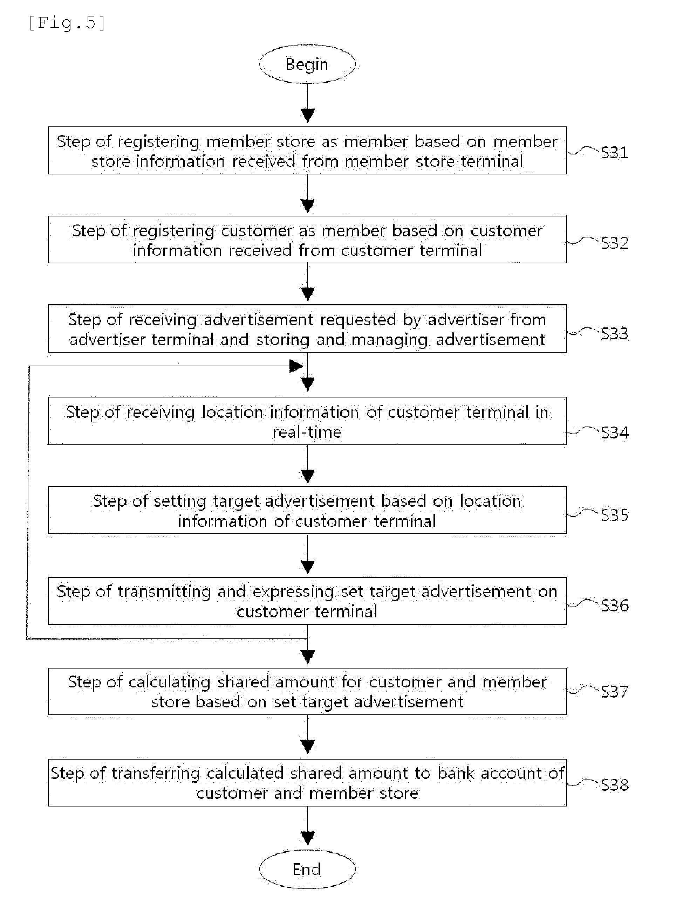

FIG. 5 is a flowchart illustrating the control flow of an advertisement method using a smart point reward service according to a second embodiment of the present invention. In FIG. 5, a first step of the second embodiment of the advertisement method using a smart point reward service of the present invention is a step of registering a member store as a member based on member store information received from the member store terminal S31. The member store information may include information on a service type, a product, a location of the member store and the like. Next, a second step of the second embodiment is a step of registering a customer as a member based on customer information received from the customer terminal S32. The customer information may include a customer name, a sex, an age, a customer terminal number and the like. Next, a third step is a step of receiving information on an advertisement requested by an advertiser from the advertiser terminal or off-line and storing and managing the advertisement information S33. The advertiser creates contents to be advertised and target advertisement conditions and transmits the advertisement contents and conditions to the point reward server so as to be stored and managed in the advertisement DB. Then, a fourth step is a step of receiving location information of the customer terminal in real-time S34. The received location information may be location information obtained from a GPS terminal attached to the customer terminal or location information of the customer terminal using a base station of a mobile communication company. Next, a fifth step is a step of setting a target advertisement object based on location information of the customer terminal, customer segment information, purchase history information and the like S35. Setting a target advertisement object based on location information of the customer is setting, for example, when the customer terminal is located in Yoksam Dong, an advertisement of a member store such as a restaurant, a clothing store, a theater or the like in Yoksam Dong and an advertisement of a product related to the member store by combining the segment information and the purchase history information of the customer. Next, a sixth step is a step of transmitting the set target advertisement to the customer terminal through an Internet network or a mobile communication network and expressing the target advertisement on the customer terminal S36. If a member store is advertised in the step of expressing the advertisement of the sixth step, a region is selected, and information on a member store located in the region is provided together with a service or product type, and, in addition, information on the address, location and phone number of the member store may be additionally provided, and the advertisement related to the member store advertises services and products carried by the member store. Next, a seventh step is a step of calculating a shared amount according to the contribution level of the customer using the advertisement and the member store managing the member based on the profitable sales of the advertisement S37. Calculation of the shared amount is sharing the profit at a predetermined ratio according to the contribution level of the customer confirming the advertisement and the member store managing the member based on the profitable sales of the advertisement on the basis of a predetermined time period. Next, an eighth step is a step of transferring the calculated shared amount to bank accounts of the customer and the member store S38 and terminating the process.

In the embodiments described above, it is preferable that an advertisement fee paid by the advertiser using the service to the business operator of the service is paid only for the advertisement confirmed by the target advertisement object.

The target advertisement system and method is not limited only to the present embodiments, and various types of questionnaires, events and announcements may be transmitted to a customer terminal, which is an object of the target advertisement, through a push function of the point reward server.

The advertisement system and the reward service method using a smart point reward service of the present invention configured as described above may enhance the effect of advertisement since a target advertisement is allowed through a method of providing points to customers and encourage customers and member stores to join as a member by sharing the advertisement profit obtained through the advertisement with customers and member stores.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. In an advertisement system for awarding points for products and services purchased by a customer at a member store and performing a target advertisement through a mobile communication terminal using information on the customer and the member store including location information and purchase history information, a target advertisement system using a service of awarding the points, the target advertisement system using the customer information and the location information according to a point reward service, the system comprising:
a plurality of customer terminals 100 connected to a point reward server 300 through an Internet network or a mobile communication network 150 and registered in the point reward server 300 as a member, for providing location information of a customer agreed to providing the location information and receiving various kinds of information from the point reward server 300;
a member store terminal 400 connected to the point reward server 300 through the Internet network or the mobile communication network 150 and installed in a member store in which a customer joins as a member, for awarding and managing predetermined points for a customer member performing a transaction and sharing segment information and the purchase history information of the registered customer member managed by the member store with the point reward server 300;
an advertiser terminal 500 connected to the point reward server 300 through the Internet network or the mobile communication network 150, for transmitting an advertisement requested by an advertiser and target advertisement conditions to the point reward server 300; and
the point reward server 300 for controlling the target advertisement system to store and manage a member registered by the customer terminal 100 based on the segment information of the customer, to store and manage a member store registered by the member store terminal 400 based on a service type, a product type and location information of the member store, to store and manage the purchase history information including point information of the customer, to select a target advertisement object according to the conditions of the advertisement requested by the advertiser from the advertiser terminal 500 based on the segment information, the purchase history information and the location information of the customer received and stored from the customer terminal 100 and the member store terminal 400, to advertise a product by transmitting advertisement contents to the customer terminal 100 of the target advertisement object, and to share an advertisement profit among a business operator, the customer and the member store at a predetermined ratio.

2. The system according to claim 1, wherein the point reward server includes:
a customer DB 320 for storing and managing the segment information on the customer registered as a member based on a customer name, a sex, an age, and a customer terminal number received from the customer terminal 100;
a member store DB 340 for storing and managing information on the member store registered as a member based on a service type, a product type and location information related to the member store received from the member store terminal;
a point management DB 330 for storing and managing the purchase history information configured by combining at least two or more pieces of information on the points awarded at a predetermined ratio for an amount paid by the customer at the member store, member store information, product information, service information, customer information and use amount information received from the member store terminal 400;
an advertisement DB 310 for storing and managing the advertisement requested by the advertiser and conditions of the target advertisement object received from the advertiser terminal 500;
a target advertisement setting unit 390 for setting the target advertisement object of the target advertisement requested by the advertiser from the advertisement DB 310 based on combination of at least two or more pieces of the point information, the member store information, the product information, the service information, the customer information and the use amount information, which are the purchase history information of the customer stored in the point management DB 330;
a target advertisement DB 360 for storing and managing the target advertisement object and the advertisement set by the target advertisement setting unit 390;
a shared amount determination unit 370 for determining a profit according to sales of the advertisement and determining a sharing ratio of the customer and the member store; and
a shared amount DB 380 for storing and managing information on the shared amount determined by the shared amount determination unit 370.

3. In a method of operating an advertisement system comprising a customer terminal, a point reward server, a member store terminal and an advertiser terminal, the system for awarding points for products and services purchased by a customer at a member store and performing a target advertisement through a mobile communication terminal using information on the customer and the member store including location and transaction information, an advertisement method using a service of awarding the points and a shared amount, a target advertisement method using the customer information and the location information according to a point reward service, the method comprising the steps of:
registering, by the point reward server, the member store as a member based on member store information received from the member store terminal S21;
registering, by the point reward server, the customer as a member based on the customer information received from the customer terminal S22;
receiving, storing and managing, by the point reward server, purchase history information on services and products purchased by the customer at the member store and the location information of the member store S24;
storing and managing, by the point reward server, information on an advertisement requested by an advertiser and target advertisement conditions received from the advertiser terminal S23;
setting, by the point reward server, a target advertisement object according to the target advertisement conditions based on the location information, the purchase history information and the member registration information S25;
transmitting, by the point reward server, the set target advertisement to the customer terminal of the set target advertisement object through an Internet network or a mobile communication network and expressing the target advertisement on the customer terminal S26; and
calculating, by the point reward server, a shared amount for the customer and the member store according to a predetermined criterion based on a profit of the advertisement S28.

4. The method according to claim 3, wherein the step of setting a target advertisement object based on the purchase history information, the location information and the member registration information S25 sets the target advertisement object based on combination of at least two or more pieces of the customer information, the member store information, a service or product type, point information and use amount information based on a service or a product used by the customer at the member store.

5. The method according to claim 3, wherein the step of calculating a shared amount for the customer and the member store based on a profit of the advertisement S28 shares the profit with the customer confirming the advertisement and the member store managing the member at a predetermined ratio according to a predetermined criterion.

6. The method according to claim 3, further comprising the step of: transferring, by the point reward server, the calculated shared amount to bank accounts of the customer and the member store S29.

7. The method according to claim 3, wherein the step of setting a target advertisement object S25 further includes the step of: receiving, by the point reward server, the location information of the customer terminal in real-time S34.

8. The method according to claim 3, further comprising, before the step of transmitting the target advertisement to the customer terminal 10, the step of filtering, by the point reward server, harmful advertisements containing pornographic materials.
